# NOUVEAU FASCICULE DE BREVET EUROPEEN

(11) **EP 0 156 686 B2**
(45) Date de publication et mention de la décision concernant l'opposition: **31.03.1993**
(45) Mention de la délivrance du brevet: 29.06.1988
(21) Numéro de dépôt: 85400340.7
(22) Date de dépôt: 22.02.1985
(51) Int. Cl.: G21C 5/06

(54) **Dispositif de maintien d'assemblage de combustible nucléaire dans un réacteur**
Halterungsanordnung für Kernbrennstoffbündel in einem Kernreaktor
Supporting device for a nuclear fuel assembly in a reactor

(30) Priorité: 22.02.1984 FR 8402682
(43) Date de publication de la demande: 02.10.1985
(73) Titulaire: FRAMATOME, 92400 Courbevoie (FR)
(72) Inventeur: Leclercq, Joseph, F-69370 Saint Didier au Mont d'Or (FR)
(74) Mandataire: Jacquelin, Marc-Henri

(56) Documents cités:
- DE-A- 2 023 587
- FR-A- 1 413 971
- FR-A- 2 326 010
- US-A- 4 298 434
- US-A- 4 309 251

## Description

L'invention concerne un réacteur nucléaire dont le coeur, constitué d'assemblages de combustible nucléaire, est équipé de dispositifs anti-envol, destinés à maintenir les assemblages en place par rapport à une plaque horizontale fixe de coeur, les assemblages ayant tous la même section droite et étant accolés suivant un réseau polygonal régulier (généralement carré ou hexagonal). Elle trouve une application particulièrement importante dans les réacteurs nucléaires, tels que les réacteurs refroidis et modérés à l'eau légère, dont les assemblages sont constitués de crayons de matière fissile supportés et maintenus en place dans l'assemblage par un squelette comportant deux pièces d'extrémité munies de trous de passage du réfrigérant reliées entre elles par des tubes.

Il est maintenant courant de commander le réacteur en utilisant une grappe de crayons contenant un matériau netrophage porté par une pièce commune qu'on appelle souvent araignée permettant de les déplacer en bloc. La répartition des crayons dans la grappe associée à un assemblage qui en est muni est telle que l'anti-réactivité des crayons s'exerce sur les assemblages adjacents, ce qui permet de n'équiper qu'une fraction des assemblages de telles grappes. D'autres assemblages seront prévus pour recevoir des grappes d'arrêt, de démarrage, de poison consommable ou, enfin, de grappes de crayons constituant des bouchons destinés à fermer les tubes guides afin que ces derniers ne constituent pas un trajet de court-circuit pour le réfrigérant du réacteur.

Dans tous les cas, les assemblages combustibles reposent sur une plaque support de coeur qui présente des ouvertures de passage du fluide réfrigérant et généralement des pions de centrage coopérant avec la plaque d'extrémité basse des assemblages pour positionner ces derniers de façon précise. Au-dessus des assemblages est placée une plaque supérieure qui délimite le coeur et possède également des ouvertures de passage du fluide réfrigérant.

La circulation ascendante du fluide réfrigérant dans le coeur exerce sur les assemblages une force qui tend à les soulever si elle excède leur poids. Pour éviter que cette poussée hydraulique ne provoque le soulèvement, encore appelé "envol", des assemblages, ce qui risquerait de les endommager, des dispositifs anti-envol sont prévus pour maintenir l'assemblage au contact de la plaque de support de coeur. Des solutions très diverses ont déjà été proposées. En particulier, on a proposé un encliquetage de maintien d'un assemblage central qui, par l'intermédiaire d'un embiellage, retient les assemblages adjacents (FR-A-2 023 786). Ce dispositif est très complexe, oblige à une manipulation de longue durée lors du changement d'assemblage au cours des arrêts du réacteur, introduit des contraintes de torsion dans le squelette de l'assemblage du fait que la commande s'effectue sous eau, à distance et par l'intermédiaire d'une tige centrale s'étendant sur toute la hauteur de l'assemblage. On a également utilisé des ressorts portés par la pièce d'extrémité haute de l'assemblage, sur lesquels la plaque supérieure de coeur vient appliquer un effort de compression maintenant les assemblages sur la plaque inférieure de coeur (FR-A-1 536 257, 2 326 010). Si ces dispositifs à ressort fonctionnent généralement de façon satisfaisante, ils ont en contrepartie l'inconvénient d'être difficiles à fabriquer, de se détériorer sous irradiation et, du fait de leur encombrement, de réduire la section de passage du fluide réfrigérant.

On a également proposé un dispositif anti-envol (US-A-4 134 790) comportant des lames élastiques solidaires de la pièce d'extrémité inférieure et munies d'un ergot que l'élasticité de la lame engage dans une gorge ménagée dans les pions de centrage dont est munie la face supérieure de la plaque de coeur. Il s'agit là d'un verrouillage élastique dont l'efficacité dépend du maintien des caractéristiques de la lame. Or, ces caractéristiques se modifient sous irradiation lors du fonctionnement du coeur et la retenue devient aléatoire. Au surplus, les lames élastiques se fragilisent sous irradiation.

On connaît enfin (US-A-4298434) un réacteur nucléaire conforme au préambule de la revendication 1, dans lequel des éléments déformables solidaires d'un assemblage peuvent être encliquetés sur les éléments rigides par déplacement longitudinal d'un élément constitué par une tige placée dans l'axe de l'assemblage et munie de bras d'appui sur les éléments élastiques.

L'invention vise à fournir un réacteur muni de dispositifs de maintien d'assemblage répondant mieux que ceux antérieurement connus aux exigences de la pratique, notamment en ce qu'ils assurent un verrouillage positif des assemblages sur une plaque de coeur, qui sera généralement (mais non obligatoirement) la plaque inférieure, en ne mettant en oeuvre que des moyens simples et robustes.

Dans ce but, l'invention propose notamment un réacteur suivant la revendication 1. L'élément déformable pourra généralement être constitué par une lame élastique présentant une liaison d'encastrement avec l'une des pièces d'extrémité de l'assemblage (généralement la pièce d'extrémité inférieure). Les emplacements de réception seront fréquemment des tubes guides prévus dans l'ossature de l'assemblage.

Dans ce cas, la lame présentant une liaison d'encastrement avec la pièce comporte un guide formant couloir de traversée pour le crayon et une came terminale que l'insertion du crayon repousse dans une position de verrouillage pour laquelle elle pénètre dans un évidement de l'élément rigide.

Plusieurs lames élastiques appartenant à des assemblages adjacents peuvent être simultanément refoulées en position de verrouillage par l'insertion d'un même crayon, soit qu'ils soient placés de part et d'autre du crayon, soit qu'ils soient disposés en cascade.

L'invention sera mieux comprise à la lecture de la description qui suit de modes particuliers d'éxécution de celle-ci, donnés à titre d'exemples non limitatifs. La description se réfère aux dessins qui l'accompagnent, dans lesquels
- la Figure 1 est une vue en couple simplifiée, montrant une fraction de l'extrémité inférieure de deux assemblages de combustible adjacents, munis d'un dispositif de maintien selon un premier mode d'exécution de l'invention ;
- la Figure 2 est une vue en coupe suivant la ligne II-II de la Figure 1 ;
- les Figures 3 et 4, similaires aux Figures 1 et 2 (la Figure 3 étant en coupe suivant la ligne III-III de la Figure 4), montrent une variante de réalisation de l'invention ;
- la Figure 5 est une vue en coupe horizontale suivant la ligne V-V des Figures 6 et 7 montrant une autre variante encore de réalisation de l'invention ;
- les Figures 6 et 7 sont des coupes suivant les lignes VI-VI et VII-VII de la Figure 5 ;
- les Figures 8 et 9, similaires aux Figures 1 et 2, montrent une autre variante encore de réalisation de l'invention, la Figure 9 étant une coupe suivant la ligne IX-IX de la Figure 1.

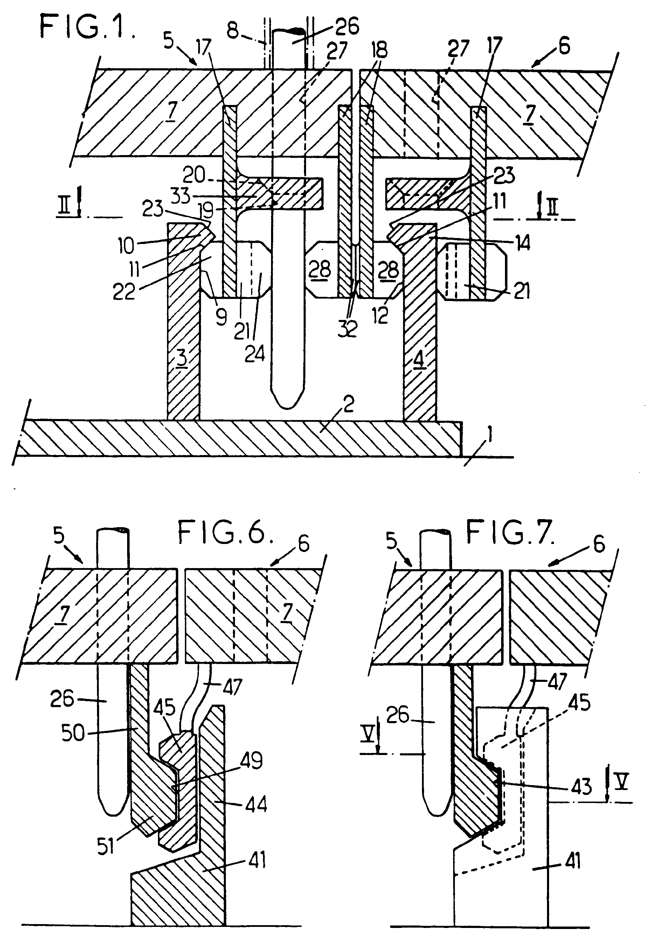

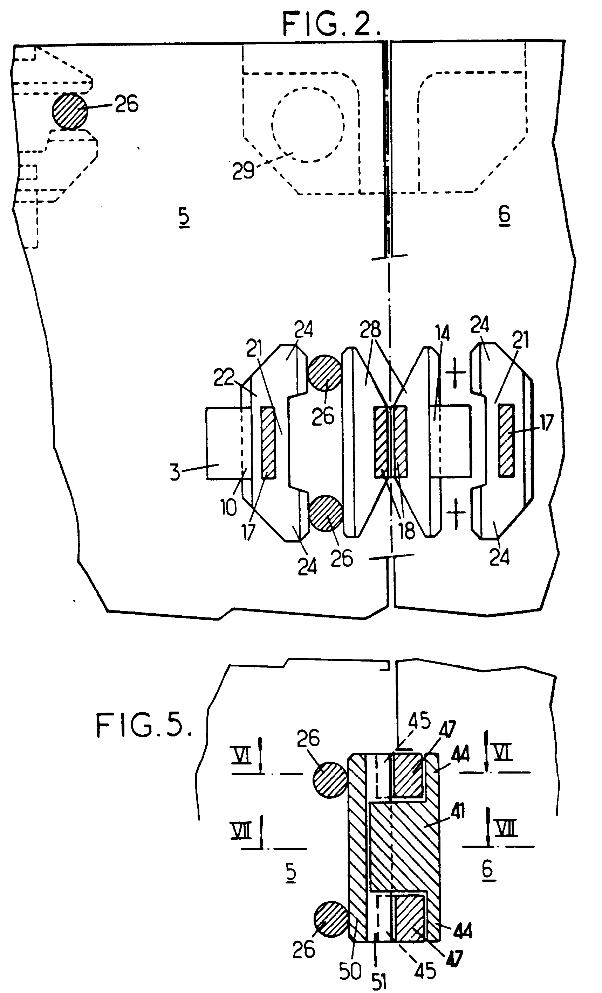

Le dispositif de maintien montré sur les Figures 1 et 2 est notamment utilisable dans un réacteur modéré et refroidi par de l'eau sous pression, comprenant une plaque support de coeur ou plaque inférieure 1 sur laquelle doivent être maintenus des assemblages de section droite carrée, au-dessus desquels est placée, lors du fonctionnement du réacteur, une plaque supérieure de coeur (non représentée sur les Figures).

Les Figures 1 et 2 montrent une fraction des pièces d'extrémité inférieure 7 de deux assemblages adjacents. Ces pièces d'extrémité comportent, de façon connue en soi et non représentée, un cadre en acier dont les extrémités inférieures des parois latérales reposent sur la plaque de coeur 1. Chaque pièce 7 est reliée par des tubes guides 8, dont un seul est représenté sur la Figure 1, à une pièce d'extrémité supérieure. Des grilles réparties le long du tube guide définissent des alvéoles disposés suivant un réseau régulier et assurant le maintien des crayons de combustible de l'assemblage. On supposera également par la suite qu'un assemblage sur deux (assemblage 5 sur les Figures 1 et 2) est prévu pour recevoir un crayon constituant bouchon d'obturation des tubes guides, tandis que l'assemblage adjacent 6 comporte des tubes guides dans lesquels peuvent circuler des éléments de commande, par exemple les crayons neu- trophages appartenant à une grappe de commande.

La plaque inférieure de coeur 1 est munie de semelles 2 auxquelles sont fixés, par exemple par soudage, des pions de centrage 3 et 4 qui seront généralement en acier inoxydable, les pions 3 étant destinés à coopérer avec l'assemblage 5 et les pions 4 avec l'assemblage 6. En d'autres termes, les pions 4 correspondent à l'emplacement d'un assemblage équipé d'une grappe de crayons formant bouchons tandis que les pions 4 correspondent à l'emplacement d'un assemblage équipé de grappes de crayons déplaçables. Les pions pourraient naturellement être directement implantés sur la plaque inférieure de coeur 1.

Les pions 3 et 4 constituent les éléments rigides du dispositif de maintien et comportent chacun au moins un évidement de verrouillage. Le pion 3 comporte un seul évidement constitué par un lamage 9 en forme de fente dirigée axialement, occupant une partie de la hauteur du pion 3 de façon à laisser subsister un embout terminal 10. La transition entre le lamage 9 d'une part et l'embout 10 d'autre part, est constituée par un chanfrein 11 destiné à faciliter le verrouillage comme on le verra plus loin. De façon similaire, le pion 4 comprend un lamage 12 dirigé axialement, de forme similaire à celle du lamage 9 et également muni d'un chanfrein 11.

Chacune des plaques d'extrémité 7 porte deux lames en métal élastique, par exemple en alliage connu sous le nom de "INCONEL", ces lames ayant la même disposition pour tous les assemblages de façon que chaque assemblage puisse être chargé à n'importe quel emplacement et avec n'importe quelle orientation dans le coeur du réacteur. La liaison entre ces lames 17 et 18 et les pièces d'extrémité 7 est du type à encastrement. Elle peut être réalisée par em- boitement et soudage de la partie terminale de la lame.

La lame 17, décalée par rapport à la périphérie de la pièce d'extrémité 7, est solidarisée d'une pièce de guidage 33 percée d'alésages 19 munis d'un chanfrein d'entrée 20, alignés avec deux tubes guides 8 lorsque la lame est détendue. A l'extrémité inférieure de la lame 17, c'est-à-dire à l'opposé de son encastrement, est fixée une pièce 21 en forme de fourchette, ayant deux becs 24 formant came coopérant avec les crayons 26 insérables dans le tube guide 8 et présentant également un ergot 22 destiné à coopérer avec le lamage 9. L'ergot 22 et la pièce 21 comportent des chanfreins. Ceux de l'ergot 22 coopèrent avec le chanfrein 11 pour l'accostage et l'encastrement sur l'embout 10 du pion 3 et avec le chanfrein 23 pour faciliter le guidage et la flexion de la lame 17 lors de la mise en pièce de l'assemblage. Ces chanfreins servent de même à son enlèvement. Les chanfreins des becs 24 de la pièce 21 facilitent l'accostage avec les crayons 26, dans le cas d'un assemblage 5 à crayons formant bouchons. L'insertion des crayons dans un alésage 27 de la pièce d'extrémité, puis dans la pièce 33, et contre la pièce 21, est facilitée du fait qu'ils possèdent une extrémité en ogive.

Dans le cas d'un assemblage 6, dans lequel l'absence de crayons 26 permet de placer le pion 4 au droit des alésages 27, les chanfreins 11 et 23 pratiqués sur l'embout 14 assurent les mêmes fonctions que celles des chanfreins 11 et 23 du pion 3, comme on le verra plus loin.

La seconde lame de ressort 18 est liée, comme la lame 17, à la pièce 7, mais au niveau du bord de cette pièce. Cette lame 18 porte à son extrémité une pièce massive 28 constituant également ergot de blocage, dans le cas représenté sur les Figures 1 et 2. Sur la Figure 2 on voit que les dispositifs anti-envol qui viennent d'être décrits sont situés au milieu des faces de l'assemblage. Ils sont complétés par des pions 29 également portés par les semelles 2, destinés à s'engager dans des trous appropriés prévus dans les angles des pièces 7. Ces pions peuvent également être munis d'un dispositif d'anti-envol.

Chacune des pièces massives 28 comporte des chanfreins comparables à ceux des pièces 21. Les chanfreins des pièces 28 portées par un assemblage 6 coopèrent avec le chanfrein 11 d'un pion 4 et le chanfrein 23 qui facilite la flexion de la lame lors de la mise en place dans l'assemblage 6. Dans le cas d'un assemblage 5, le chanfrein supérieur de la pièce 28 coopère avec les crayons 26 associés.

Chaque pièce 28 se prolonge, à l'opposé de la face munie de chanfreins, par un talon 32 également chanfreiné, dont l'épaisseur est sensiblement égale à la moitié de l'espace qui subsiste entre les assemblages 5 et 6 lorsque ces derniers sont en place.

La mise en oeuvre du dispositif anti-envol est la suivante, si l'on suppose que les assemblages 6 et 5 montrés en Figures 1 et 2 sont insérés dans cet ordre (ce qui n'est nullement impératif ).

L'assemblage 6 est amené, à l'aide du pont roulant, à la verticale d'un emplacement muni de pions 4. L'assemblage 6 est ensuite descendu. En fin de descente, la pièce 28 vient buter par son chanfrein intérieur sur le chanfrein 23 de l'embout 14 du pion 4. La descente de l'assemblage se poursuit, ce qui repousse les lames 18 jusqu'à ce que leurs pièces 28 viennent s'encliqueter dans le lamage 12 des pions 4.

On charge de la même façon l'assemblage 5, ne portant pas la grappe de crayons 26. On descend cet assemblage. Le chanfrein inférieur de chaque embout 22 vient s'appuyer contre le chanfrein 23 de l'embout 10 du pion 3 correspondant, la lame 17 se déforme en flexion pendant que la descente de l'assemblage se poursuit et, enfin, la lame enfonce l'ergot 22 dans le lamage 9. Au cours de cette descente, les lames 18 de l'assemblage ne sont pas sollicitées: seul le talon de chaque lame 18 vient en contact avec le talon 32 d'une lame 18 sur un assemblage 6 adjacent.

Une fois tous les assemblages qui constituent le coeur en place, on insère les grappes de bouchons dans les assemblages 5. Chaque bouchon qui sort d'un tube guide 8 traverse un alésage correspondant 27 de la pièce d'extrémité 7, puis la pièce de guidage 33 dans laquelle elle est dirigée par le chanfrein correspondant 20. Le crayon s'intercale ensuite entre les pièces 21 et 28, ce qui bloque en place les pièces 21 et 28 situées de part et d'autre, ainsi que la lame 28 d'un assemblage 6 adjacent, du fait de la liaison de butée entre les talons 32. On voit que l'on bloque ainsi, par insertion d'une grappe de crayons 26, non seulement l'assemblage qui reçoit la grappe, mais aussi les assemblages adjacents.

Une fois les grappes de crayons insérées, on met en place la plaque supérieure de coeur, ce qui interdit tout déplacement axial des grappes de crayons formant bouchons et, par conséquent, tout déplacement des crayons 26.

Le déchargement des assemblages s'effectue par un processus inverse, après retrait de la plaque supérieure de coeur et des grappes de crayons. Il faut remarquer que la force à exercer pour dégager les assemblages est à peine supérieure à leur poids, puisqu'il suffit de vaincre la faible force élastique des lames 17 et 18.

Dans une variante du mode de réalisation montré en Figures 1 et 2, les assemblages 5 sont mis en place équipés de leurs grappes de crayons. Mais un ressort est alors prévu pour maintenir au repos la grappe dans une position suffisamment haute pour que les crayons ne gênent pas le libre débattement des lames 17 et 18. Il suffit pour cela que le ressort maintienne au repos les crayons à un niveau supérieur à celui des pièces de guidage 33. Une fois tous les assemblages dans le coeur, on met en place la plaque supérieure de coeur, ce qui comprime le ressort des grappes et enfonce les crayons 26 dans les pièces de guidage 33 puis entre les pièces 21 et 28. Lors du déchargement du coeur, les ressorts relèvent les crayons 26 au-dessus des pièces de guidage 33 lorsqu'on enlève la plaque de coeur.

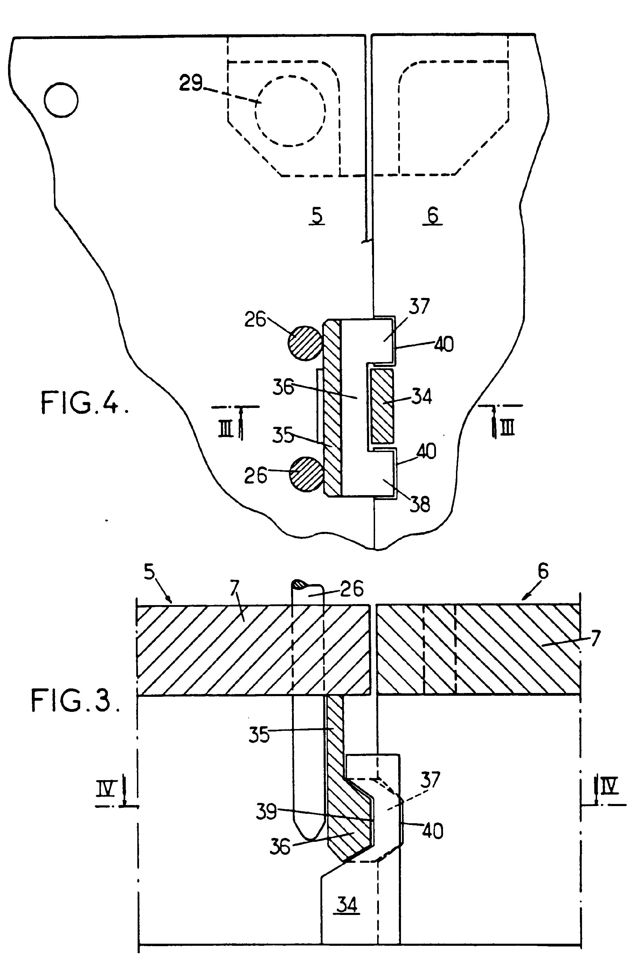

Le mode de réalisation montré en Figures 3 et 4 se différencie essentiellement des Figures 1 et 2 en ce qu'un seul pion 34 porté par la semelle 2 et situé au-dessous de l'intervalle qui sépare les deux assemblages adjacents 5 et 6, participe au maintien des deux assemblages. Les deux assemblages sont cette fois différents. L'assemblage porte des éléments élastiques 35 d'un seul type, de forme comparable à celle des lames 17 et des pièces 21 des Figures 1 et 2. Chaque élément élastique 35 comporte une lame élastique portant à son extrémité inférieure une pièce en forme de fourchette présentant trois ergots 36, 37 et 38 dirigés vers l'extérieur de l'assemblage 5. Lors du chargement de l'assemblage 5 démuni de sa grappe de crayons 26, alors que l'assemblage 6 est déjà en place, l'ergot 36 vient s'encliqueter dans une gorge 39 du pion 34, tandis que les ergots latéraux 37 et 38 viennent s'encliqueter dans des encoches 40 ménagées dans la paroi latérale de la pièce d'extrémité 7 de l'assemblage 6 adjacent. Les ergots, gorge, et encoches présentent, comme dans le cas précédent, des chanfreins facilitant l'insertion et l'enlèvement. Lorsque la grappe de crayons 26 est insérée, les crayons viennent s'appuyer contre la face de l'élément élastique 35 opposée aux ergots 36, 37 et 38, interdisant ainsi à ces ergots de s'échapper de la gorge 39 et des encoches 40.

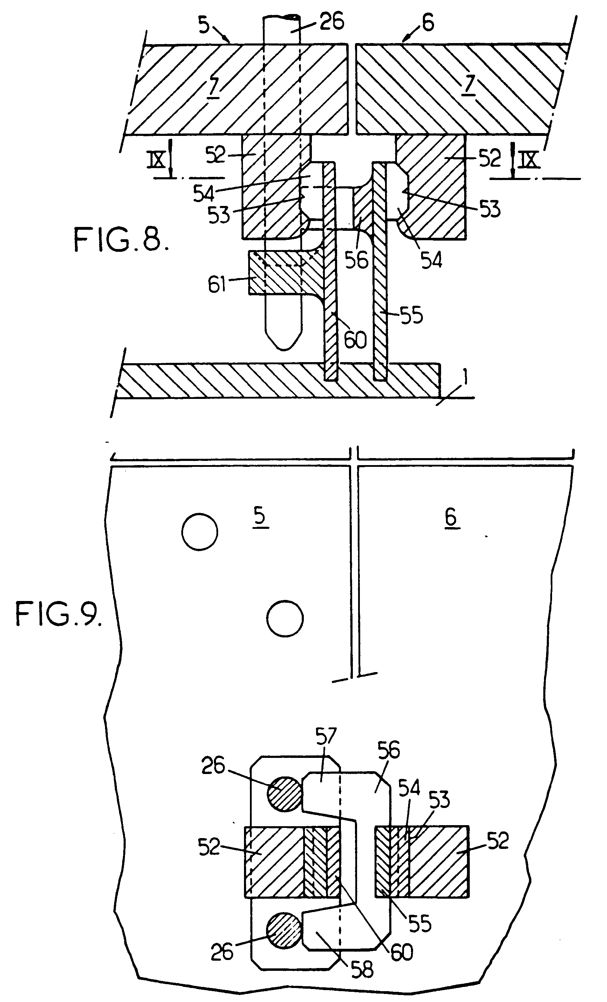

Dans le mode de réalisation montré, de façon très fragmentaire, en Figures 5, 6 et 7, un même pion 41 participe encore au maintien de deux assemblages adjacents 5 et 6. Ce pion 41 comporte une partie médiane épaisse, mais munie d'une gorge 43 terminée par des chanfreins, et deux ailes minces 44. Au droit de ces ailes minces viennent se loger deux ergots 45 portés par des lames élastiques 47 liées à la pièce d'extrémité 7 de l'assemblage 6. A la pièce d'extrémité 7 de l'assemblage 5 est fixée une lame élastique 50 munie à son extrémité d'un ergot 51 occupanttoute la largeur de la lame 50, largeur qui est suffisante pour que les crayons 26 puissent s'appliquer sur la lame et pour que l'ergot 51 puisse s'engager dans les gorges 49. On peut considérer ce montage des lames élastiques 47 et 50 comme étant en cascade. Le crayon 26, lorsqu'il est inséré, maintient la lame élastique dans une position telle que son ergot 51 soit verrouillé dans la gorge 43 et retienne les ergots 45, qui ne peuvent se dégager du fait de leur appui contre les ailes 44.

Enfin, le mode de réalisation montré en Figures 8 et 9 peut être regardé comme inversé par rapport à celui des Figures 1 et 2. Les lames élastiques 55 et 60 sont encastrées dans une semelle fixée à la plaque support de coeur 1 alors que les pions sont solidaires de la pièce d'extrémité 7 des assemblages 5 et 6. Les pions 52 sont identiques sur tous les assemblages. Ils comportent une gorge 53 longitudinale chanfreinée tournée vers l'extérieur de l'assemblage. Chacune de ces gorges 53 est prévue pour recevoir un ergot 54 porté par chacune des lames élastiques 55 et 60. Chaque lame élastique 60 porte également un guide 61 destiné à recevoir deux crayons 26 et à les guider axialement. Chaque lame élastique 55 porte, à l'opposé de son ergot 54, une pièce 56 en forme de fourchette dont les becs 57 et 58 viennent au contact des crayons 26. Ces crayons, lorsqu'ils sont en place comme indiqué sur les Figures 8 et 9, interdisent toute flexion des lames 55 et 60 et assurent un blocage réciproque des ergots 54 dans les gorges 53.

L'invention est susceptible de nombreuses autres variantes de réalisation. En particulier, bien que cette solution soit en général moins favorable, le dispositif anti-envol peut associer des éléments portés par la pièce d'extrémité supérieure des assemblages et par la plaque supérieure de coeur. Il doit être entendu que la portée du présent brevet s'étend à de telles variantes, ainsi plus généralement qu'à toutes autres restant dans le domaine des équivalences. Il doit être entendu de plus que cette portée s'étend aux éléments essentiels du dispositif et à des assemblages combustibles équipés d'une fraction des composants du dispositif anti-envol.

C'est ainsi que l'invention n'est pas limitée aux assemblage combustibles comportant des tubes guides comme organes de structure et de guidage, ni aux coeurs de réacteurs utilisant des grappes de bouchons d'obturation des tubes guides.

En effet, l'invention couvre des dispositifs dans lesquels les crayons 26 sont remplaçables par des tubes, en matériau transparent aux neutrons, maintenus, sous forme d'araignée ou non, par la plaque supérieure de coeur, positionnés dans des alvéoles de grille équipés ou non de tubes guides 8.

## Revendications

1. Réacteur nucléaire dont le coeur, constitué d'assemblages (5,6) de combustible nucléaire, est équipé de dispositifs anti-envol ou de maintien destinés à maintenir des assemblages en place par rapport à une plaque (1) horizontale fixe de coeur, lesdits assemblages (5,6) ayant tous la même section droite et étant accolés suivant un réseau polygonal régulier, chaque dispositif de maintien comportant au moins un élément déformable (17,18;35;47,50;55,60) de verrouillage, solidaire de l'un au moins des assemblages, et un élément rigide (3,4;34;41;52) solidaire de la plaque (1) fixe de coeur, ou inversement, enclique- tables mutuellement par déformation de l'élément déformable, transversalement à la direction d'insertion des assemblages, le verrouillage de l'élément déformable étant obtenu par déplacement longitudinal d'un élément (26) déplaçable logé dans un emplacement de réception (8),
caractérisé en ce que les assemblages de combustible nucléaire sont répartis en deux groupes, un premier groupe étant constitué d'assemblages équipés d'au moins deux éléments déplaçables immobilisés lors du fonctionnement du réacteur dans une position où ils maintiennent les éléments déformables encliquetés dans les éléments rigides, et un second groupe étant constitué d'assemblages non équipés de tels éléments déplaçables, mais chacun adjacent à au moins un assemblage du premier groupe, et en ce que chaque élément déplaçable est constitué par un crayon d'obturation (26) insérable verticalement dans son emplacement de réception, l'insertion d'un tel crayon d'obturation provoquant, au moins pour certains crayons, le verrouillage simultané de l'assemblage du premier groupe dans lequel il est inséré et d'un assemblage du second groupe qui lui est adjacent.

2. Réactéur selon la revendication 1,
caractérisé en ce que les emplacements de réception des crayons (26) sont constitués par les tubes guides (8) de l'ossature des assemblages combustibles.

3. Réacteur selon la revendication 1 ou 2,
caractérisé en que chaque élément déformable est constitué par un élément (17, 18; 35; 47; 55, 50) élastique présentant une liaison d'encastrement avec l'une des pièces d'extrémité (7) de l'assemblage tandis que chaque élément rigide est fixé à la plaque fixe (1).

4. Réacteur selon la revendication 3,
caractérisé en ce que ledit élément élastique comporte une lame (17,18; 35, 47, 55, 60) munie à son extrémité d'un ergot (22, 28; 36- 38, 45, 54) chanfreiné coopérant avec un lamage ou gorge (9, 12; 39; 43; 53) également chanfreiné ménagé dans un desdits éléments rigides.

5. Réacteur selon la revendication 3 ou 4,
caractérisé en ce que chacun desdits éléments déformables comprend au moins un élément (33; 35; 50, 61) destiné à prendre appui contre le crayon d'obturation respectif, lorsque ledit crayon est inséré dans son emplacement de réception.

6. Réacteur selon la revendication 1 ou 2,
caractérisé en ce que les assemblages sont tous identiques et en ce que l'une des pièces d'extrémité de chaque assemblage comporte un jeu de plusieurs éléments déformables constitués chacun par une lame élastique (17) présentant une liaison d'encastrement avec l'assemblage, munie à l'extrémité opposée à l'assemblage d'un ergot (22) coopérant avec l'élément rigide (34) et d'une pièce destinée à prendre appui sur un crayon au moins, la lame élastique (17) et un alésage (27) de passage du crayon (26) dans la pièce d'extrémité étant disposés, l'un par rapport à l'autre, de façon que le crayon interdise la flexion de la lame et le dégagement de l'ergot qu'elle porte lorsqu'il est en place. (Fig 1).

7. Réacteur selon la revendication 6,
caractérisé en ce que chaque assemblage porte un second jeu de lames élastiques (18) munies d'ergots (28) destinés, sur un assemblage muni de crayons (26), à coopérer avec un crayon sur un assemblage démuni de crayons, à coopérer avec un lamager (9, 12) ou gorge ménagé dans l'élément rigide, (3, 4) les lames élastiques (18) étant placées de telle façon que les lames élasti- : ques de deux assemblages adjacents soient en appui l'une contre l'autre.

## Patentansprüche

1. Kernreaktor, dessen Kern, bestehend aus Brennelementkassetten (5, 6) mit Vorrichtungen zum Verhindern eines Abhebens der der Brennelementkassetten oder zum Haltern derselben bezüglich einer ortsfesten horizontalen Platte (1) des Kerns versehen ist, wobei die Kassetten (5, 6) alle denselben Querschnitt haben und nach einem gleichmäßigen polygonalen Raster angeordnet sind, wobei jede Festhaltevorrichtung mindestens ein verformbares Verriegelungselement (17, 18; 35; 47, 50; 55, 60), das mit mindestens einer der Brennelementkassetten (5, 6) verbunden ist, sowie ein steifes Element (3, 4; 34; 41; 52), das mit der ortsfesten Platte (1) des Kerns verbunden ist, oder umgekehrt, aufweist, die durch Verformung des verformbaren Elements quer zur Richtung der Einfügung der Brennelementkassetten ineinander einklinkbar sind, wobei die Verriegelung des verformbaren Elements erzielt wird durch Längsbewegung eines in einer Aufnahmestelle (8) angebrachten beweglichen Elements (26), dadurch gekennzeichnet, daß die Kernbrennstoffkassetten in zwei Gruppen aufgeteilt sind, wobei eine erste Gruppe aus Kassetten besteht, die mit mindestens zwei beweglichen Elementen versehen sind, die beim Betrieb des Reaktors in einer Position verankert sind, in der sie die verformbaren Elemente in den steifen Elementen eingeklinkt halten, und eine zweite Gruppe aus Kassetten besteht, die nicht mit solchen beweglichen Elementen versehen sind, die aber jede zu mindestens einer der Kassetten der ersten Gruppe benachbart ist, und daß jedes bewegliche Element aus einem Verschlußstift (26) besteht, der vertikal in seine Aufnahmestellen einfügbar ist, wobei die Einfügung eines solchen Verschlußstifts, zumindest für einige Stifte, die gleichzeitige Verriegelung der Kassette der ersten Gruppe, in die er eingefügt wird, als auch die einer benachbarten Kassette der zweiten Gruppe bewirkt.

2. Kernreaktor nach Anspruch 1, dadurch gekennzeichnet, daß die Aufnahmestellen der Stifte (26) aus den Führungsrohren (8) der Tragkonstruktion der Brennelementkassetten bestehen.

3. Kernreaktor nach Anspruch 1 oder2, dadurch gekennzeichnet, daß jedes verformbare Element aus einem elstischen Element (17,28; 35,47; 55, 60) besteht, das eine Steckverbindung mit einem der Endstücke (7) der Brennelementkassette aufweist, während jedes steife Element an der ortsfesten Platte (1) befestigt ist.

4. Kernreaktor nach Anspruch 3, dadurch gekennzeichnet, daß das elastische Element eine Lamelle (17, 18; 35, 47; 55, 60) aufweist, die an ihrem Ende mit mit einem abgeschrägten Vorsprung (22, 28; 36-38; 45, 54) versehen ist, der mit einer Senkung oder Nut (9, 12; 39; 43; 53) zusammenwirkt, die ebenfalls abgeschrägt in eines der steifen Elemente eingearbeitet ist.

5. Kernreaktor nach Anspruch 3 oder 4, dadurch gekennzeichnet, daß jedes der verformbaren Elemente mindestens ein Element (33; 35; 50, 61) aufweist, das dazu bestimmt ist, gegen den zugehörigen Verschlußstift (26) anzuliegen, wenn der Stift in seine Aufnahmestelle eingefügt ist.

6. Kernreaktor nach Anspruch 1 oder 2, dadurch gekennzeichnet, daß die Brennelementkassetten alle identisch sind, und dadurch, daß eines der Endstücke jeder Brennelementkassette eine Satz aus mehreren verformbaren Elementen aufweist, die jedes bestehen aus einer elastischen Lamelle (17), die eine Einsteckverbindung mit der Brennelementkassette aufweist und am der Brennelementkassette gegenüberliegenden Ende mit einem Vorsprung (22) versehen ist, der mit dem steifen Element (34) zusammenwirkt, und einem Teil, das dazu bestimmt ist, mindestens auf einem Stift anzuliegen, wobei die elastische Lamelle (17) und eine Durchgangsöffnung (27) für den Stift (26) in dem Endstück derart zueinander angeordnet sind, daß der Stift die Verbiegung der Lamelle und das Lösen des Vorsprungs, den diese trägt, während dieser plaziert ist, verhindert.

7. Kernreaktor nach Anspruch 6, dadurch gekennzeichnet, daß jede Brennelementkassette einen zweiten Satz elastischer Lamellen (18) aufweist, die mit Vorsprüngen (28) versehen sind, die dazu bestimmt sind, auf einer mit Stiften (26) versehenen Brennelementkassette mit einem Stift und auf einer nicht mit Stiften versehenen Brennelementkassette mit einer in dem steifen Element (3, 4) angeordneten Senkung oder Nut (9, 12) zusammenzuwirken, wobei die elastischen Lamellen (18) derart angeordnet sind, daß die elastischen Lamellen zweier benachbarter Brennelementkassetten aneinander anliegen.

## Claims

1. Nuclear reactor whose core, consisting of nuclear fuel assemblies (5, 6), is equipped with holddown or retention devices intended to keep the assemblies in place in relation to a fixed horizontal core plate (1), the said assemblies (5, 6) all having the same cross-section and being side- by-side in a regular polygonal array, each retention device comprising at least one deformable element (17, 18; 35; 47, 50; 55, 60) firmly attached to at least one of the assemblies (5, 6) and a rigid element (3, 4; 37; 41; 52) firmly attached to the fixed core plate (1) or, conversely, mutually snap-fastenable by deformation of the deformable element, transversely to the insertion direction of the assemblies, the deformable element being locked by longitudinal displacement of a displaceable element (26) housed in a housing location (8), characterised in that the nuclear fuel assemblies are distributed in two groups, a first group consisting of assemblies equipped with at least two displaceable elements immobilised during the operation of the reactor, in a position in which they keep the snap-fastened deformable elements in the rigid elements, and a second group consisting of assemblies not equipped with such displaceable elements, but each adjacent to at least one assembly of the first group, and in that each displaceable element is constituted by a stopper rod (26) which can be inserted vertically into its housing location, the insertion of such a stopper rod causing, at least for some rods, the simultaneous locking of the assembly of the first group, into which it is inserted, and of an assembly of the second group which is adjacent to it.

2. Reactor according to Claim 1, characterised in that the locations for housing the rods (26) are constituted by the guide tubes (8) of the skeleton of the fuel assemblies.

3. Reactor according to Claim 1 or 2, characterised in that each deformable element is constituted by a spring element (17, 18; 35; 47; 55, 50) having an embedding connection with one of the end parts (7) of the assembly, whereas each rigid element is attached to the fixed plate (1).

4. Reactor according to Claim 3, characterised in that the said spring element includes a leaf (17, 18; 35, 47, 55, 60) fitted at its end with a chamfered spigot (22, 28; 36-38, 45, 54) interacting with a countersink or groove (9, 12; 39; 43; 53), also chamfered, made in one of the said rigid elements.

5. Reactor according to Claim 3 or 4, characterised in that each of the said deformable elements comprises at least one element (33; 35; 50,61) intended to bear against the respective stopper rod when the said rod is inserted into its housing location.

6. Reactor according to Claim 1 or 2, characterised in that the assemblies are all identical and in that one of the end parts of each assembly includes a set of several deformable elements each constituted by a spring leaf (17) having an embedding connection with the assembly and fitted at the end opposite the assembly with a spigot (22) interacting with the rigid element (34) and fitted with a part intended to bear on at least one rod, the spring leaf (17) and a borehole (27) for passage of the rod (26) into the end part being disposed, one in relation to the other, so that the rod prevents the bending of the leaf and the disengagement of the spigot which this leaf carries when it is in place (Fig. 1).

7. Reactor according to Claim 6, characterised in that each assembly carries a second set of spring leaves (18) fitted with spigots (28) intended, on an assembly fitted with rods (26), to interact with a rod on an assembly not fitted with rods, to interact with a countersink (9, 12) or groove made in the rigid element (3, 4), the spring leaves (18) being placed so that the spring leaves of two adjacent assemblies bear one against the other.
